# EUROPÄISCHE PATENTSCHRIFT

(11) **EP 3 926 294 B1**
(45) Veröffentlichungstag und Bekanntmachung des Hinweises auf die Patenterteilung: **21.02.2024**
(21) Anmeldenummer: 21182861.1
(22) Anmeldetag: 12.09.2011
(51) Int. Cl.: G01B 5/012, G01B 5/016

(54) **TASTSTIFT-ANORDNUNG**
SCANNING PIN ASSEMBLY
AGENCEMENT DE PALPEUR

(30) Priorität: 10.09.2010 DE 102010044972; 29.04.2011 DE 102011100075
(43) Veröffentlichungstag der Anmeldung: 22.12.2021
(62) Teilanmeldung aus: 11813654.8
(73) Patentinhaber: Carl Zeiss Industrielle Messtechnik GmbH, 73447 Oberkochen (DE)
(72) Erfinder: RICHTER, Frank, 89522 Heidenheim (DE)
(74) Vertreter: Vossius & Partner Patentanwälte Rechtsanwälte mbB

(56) Entgegenhaltungen:
- DE-A1- 4 414 747
- DE-A1-102008 028 986
- DE-U1- 20 215 239
- US-A- 5 564 664
- US-A- 5 848 477
- US-A1- 2001 054 237

## Beschreibung

Die vorliegende Erfindung betrifft ein Zwischenelement sowie ein Herstellungsverfahren für ein Zwischenelement gemäß den anhängigen unabhängigen Ansprüchen und bezieht sich somit darauf, wie bei Koordinatenmessmaschinen Verbesserungen erzielbar sind.

Koordinatenmessmaschinen dienen dazu, Werkstücke auszumessen, z. B. um die Maßhaltigkeit von Werkstücken in der Fertigung zu überprüfen. Dazu wird ein Taststift an einem beweglichen Arm der Koordinatenmessmaschine befestigt und damit in Kontakt zum Werkstück geführt. Die Position, die der Arm hat, wenn der Taststift das Werkstück berührt, wird bestimmt und daraus ein Oberflächenpunkt am Werkstück ermittelt. Aus einer Vielzahl von Messungen dergestalt erfasster Punkte kann dann auf die Oberflächenkontur des auszumessenden Werkstückes geschlossen werden. Weitere Messverfahren, bei denen die Oberfläche mit einer Koordinatenmessmaschine nicht punktweise berührend, sondern beispielsweise linienweise nachfahrend ausgemessen wird, seien der Vollständigkeit halber erwähnt. Dass die nachfolgend beschriebene Anordnung für alle bekannten Koordinatenmessmaschinen verwendbar ist, wird einleuchtend sein.

Ein Problem bei herkömmlichen Koordinatenmessmaschinen besteht nun darin, dass auch komplex geformte Werkstücke abgetastet werden müssen, beispielsweise Motorblöcke mitsamt den darin vorgesehenen Bohrungen. Dies erfordert es, den Taststift gegebenenfalls geneigt gegen den Arm anzuordnen, etwa, um ihn in eine schräge Bohrung einzuführen. Die erforderliche Neigung, der Abstand einer Taststiftspitze vom Arm und usw. sind dabei von Werkstück zu Werkstück verschieden. Daher wurden bislang zwischen dem Werkstiftträger am Arm und der Taststiftspitze, die typisch aus sehr hartem Material besteht und beispielsweise als Rubin-Kugel gebildet sein kann, Abstands- und Ausrichtglieder gesetzt. Demgemäß ist die Spitze des Taststiftes typisch auf einem geeigneten, dünnen Stab, der beispielsweise aus CFK oder Hartmetall gebildet sein kann, angeordnet, wobei dieser Stab wiederum in einem Einschraubgewinde verankert ist, mit welchem der so gebildete gesamte Taststift an dem einen, als Abstands- oder Ausrichtglied bestimmten Zwischenelement oder am Arm befestigt werden kann.

Problematisch ist nun, wenn der Taststift mit der Röhrchen-Achse weder senkrecht auf die koordinatenmessmaschinenseitige Auflagefläche des Armes steht, von welcher der Arm bei Berührung leicht abhebt, noch exakt senkrecht zu dieser. In einem solchen Fall ist es nämlich erforderlich, den Taststift selbst geneigt bzw. geschwenkt gegen den Taststiftträger der Koordinatenmessmaschine anzuordnen. Dabei müssen Neigungen um wenigstens eine Achse in zwei Richtungen festgelegt werden; dies erfordert, dass die Abstandsglieder geeignet ausgebildet sind.

Taststifte unterliegen nun einem Verschleiß. Dieser kann sowohl durch Auf- oder Abrieb auf der Tastspitzkugel bei scannendem Messen wie auch durch mechanische Zerstörung usw. bedingt sein. Dadurch wird ein Wechsel der Taststifte erforderlich. Nach einem solchen Wechsel muss die Tastspitzkugel eines neuen Taststiftes wieder exakt in der selben, reproduzierten Position angeordnet sein wie zuvor beim alten Taststift, um Messfehler zu vermeiden. Ist dies nicht gewährleistet, so sind nach einem Wechsel des Taststiftes auch die Messwerte nicht mehr reproduzierbar, was gegebenenfalls erhebliche Kalibrierungsarbeiten zur Folge hat. Dass auch der Taststift wie zuvor ausgerichtet sein muss, wird einleuchten.

Bisher wurden zur Erzielung einer geneigten Anordnung Klemmelemente verwendet, mit welchen die Schwenk- bzw. Neigestellung einer Taststiftaufnahme reibschlüssig fixiert wurde. Die entsprechenden Anordnungen waren schlecht, d.h. ungenau einzustellen, was insbesondere bei Wechsel zwischen unterschiedlichen auszumessenden Werkstücken sehr störend ist und überdies eine geringe Reproduzierbarkeit trotz hoher Kosten des Elements bedingt.

DE 44 14 747 A1 betrifft ein Messwerkzeug für das Vermessen von Flächen dreidimensionaler Gegenstände, beispielsweise von nicht planaren Fahrzeugtürfeldern.

Aus der DE 10 2008 028 986 A1 ist eine Halteeinrichtung zum Halten eines Kalibrierkörpers zum Kalibrieren eines Messsensors eines Koordinatenmessgerätes bekannt, wobei die Halteeinrichtung eine Einstelleinrichtung aufweist, die ausgestaltet ist, durch Betätigung eines Benutzers eine Ausrichtung des an der Halteeinrichtung gehaltenen Kalibrierkörpers einzustellen.

Aus der US 5,848,477 ist eine Koordinatenmessmaschine bekannt, bei welcher der Taststift an einer mit voneinander beabstandeten Vertiefungen versehenen Kugel angebracht wird. Durch Wahl einer Vertiefung, die gegen eine Fixierung gepresst wird, kann der Taststift ausgerichtet werden.

US 5,564,664 A betrifft eine kugelförmige Aufhängung für ein technisches Instrument mit einem Halteteil zur Aufnahme und Lagerung eines kugelsegmentförmigen Endes eines Instrumentenhalters und mit einer Vorrichtung zum Arretieren des Instrumentenhalters gegenüber dem Halteteil.

US 2001/054237 A1 betrifft eine Berührungssignalsonde, die verwendet wird, um die Form eines gemessenen Objekts mit einer dreidimensionalen Messmaschine zu messen.

Es ist wünschenswert, eine Möglichkeit zu schaffen, mit der Tastspitzen auf einfache, preiswerte und reproduzierbare Weise schräg gegen Taststiftträger einer Koordinatenmessmaschine angeordnet werden können.

Die Aufgabe dieser Erfindung besteht darin, Neues für die gewerbliche Anwendung bereitzustellen.

Die Lösung dieser Aufgabe wird in unabhängiger Form beansprucht. Bevorzugte Ausführungsformen finden sich in den Unteransprüchen.

Die vorliegende Erfindung schlägt somit in einem ersten Grundgedanken ein Zwischenelement für die Anordnung eines Taststiftes gegen den Taststiftträger einer Koordinatenmessmaschine vor, aufweisend einen bevorzugt einstückigen Grundkörper mit einem Taststiftende und einem Maschinenende, wobei das Maschinenende mit einem Ankupplungselement und mit einem Mittel versehen ist, um eine reproduzierbare Drehausrichtung zu gewährleisten, und das Taststiftende eine gegen die Achse des Ankupplungselementes feststehend geneigte, an einer allgemeinen, durch die Anlagefläche abgeflachten Kugelsegmentform vorgesehene Anlagefläche aufweist, die mit einem Form- und/oder Reibschlussmittel für den form- oder reibschlüssigen Eingriff mit einem Befestigungsende des Taststiftes in Anlage an der Anlagefläche ausgebildet ist.

Ein erster wesentlicher Aspekt der Erfindung ist somit darin, zu erkennen, dass zur Definition der Taststiftanordnung, d.h. hier der Ausrichtung des Taststiftes gegen den Taststiftträger, eine geneigte Anlagefläche am Zwischenelement vorgesehen wird, gegen welche der Taststift in Formschluss gebracht werden kann. Auf diese Weise ist durch die Reproduzierbarkeit des Formschlusses auch bei Wechsel des Taststiftes ein hohes Maß an Reproduzierbarkeit gewährleistet, da einerseits die Anlage des Taststiftendes an dem Zwischenelement durch den Formschluss sehr genau definiert und andererseits die Anlagefläche auch ein hohes Maß an Stabilität gewährleistet. Als geneigt wird eine Anlagefläche bevorzugt dann verstanden,. wenn die Abweichung von einer Senkrechten auf eine Taststiftachse beziehungsweise von der Taststiftachse mehr als wenigstens 4° beträgt, bevorzugt zwischen 10° und 85° oder über 95 bis z.B. 120° liegt, um einer erforderlichen Sollneigung zu entsprechen.

Gemäß der Erfindung wird das Zwischenelement mit einem einstückigen Grundkörper gebildet, dem allenfalls noch Fixierelemente, etwa zur Fixierung des Drehkupplungselementes an einem maschinennäheren Gegenstück zugeordnet sind. Dies erlaubt eine sehr günstige Ausbildung des gesamten Zwischenelementes, was wiederum einen schnellen und häufigen Wechsel entsprechend einer gewünschten Neigung und/oder Drehausrichtung ermöglicht. Damit kann eine Vielzahl von Zwischenelementen, etwa als Zwischenelementsatz vorgesehen werden und/oder es können, was bevorzugt ist, die Grundkörper für eine jeweilige Anwendung dediziert bereitgestellt werden. Das Abfräsen der geneigten Anlagenfläche vom Grundkörper erlaubt eine sehr preiswerte Herstellung, insbesondere ohne zusätzliche Werkzeuge in jenen Betrieben zu erfordern, die klassisch Koordinatenmessmaschinen einsetzen.

Das Ankupplungselement ist ein Drehkupplungselement.

Gemäß der Erfindung ist das Drehkupplungselement als Zapfen ausgestaltet, um welchen die Anlagefläche drehbar ist. Die Ausbildung als Zapfen ermöglicht es, zusätzlich zur Neigung auch ein Drehelement vorzusehen, das mit geringsten Kosten produziert werden kann. Gerade die Kombination eines Drehkupplungselementes, das eines von Zapfenloch und Zapfen aufweist, mit der geneigten Anlagefläche bietet erhebliche Vorteile hinsichtlich der Fertigungskosten und der Voranfertigung von Rohlingen. Es sei erwähnt, dass hier verschiedene Möglichkeiten bestehen. Besonders bevorzugt ist es, wenn das Zwischenelement am Zapfen gegen eine Fläche gedrängt werden kann, über welche ein den Zapfen radial umgebender, evtl. kegelartig geneigter Bereich des Zwischenelementes sich bei Drehausrichtung hinweg bewegt. Dies erlaubt eine wiederholte Verstellung. Alternativ ist eine einmalige Drehelementausrichtung z.B. unter Verwendung eines einzuklebenden Zapfens, möglich. Auch die Verwendung eines solchen durch Einkleben am Ort eines Endbenutzers, der zuvor die Neigung an einem Zwischenelement durch Fräsen vorgegeben hat, wird als für sich erfinderisch angesehen.

Wenn das Drehkupplungselement als Zapfen ausgestaltet ist, ist es daher besonders bevorzugt, wenn dieser Zapfen eine Eintiefung bzw. Rille aufweist, gegen welche Klemmmittel gedrängt werden können, beispielsweise in Form von den Zapfen in das Zapfenlochlager einpressenden Madenschrauben oder dergleichen. Alternativ wird bei einer Ausbildung des Drehkupplungselementes als Zapfenloch eine Aufnahme für derartige Klemmmittel vorgesehen sein. Dass das maschinenseitige Gegenstück entsprechend komplementär geformt sein wird, ist einleuchtend. Als besonders vorteilhaft sei erwähnt, Abstandsstücke für die Beabstandung von Maschinenarm und Taststift so auszubilden, dass das komplementär geformte Gegenstück für ein Taststift-Drehkupplungselement fest mit dem abstandsgebenden Rohr- oder Stabelement verbunden ist. Dies ist vorteilhaft, weil so die ansonsten erforderliche, eher instabile Verschraubung des Drehkupplungselementes mit einem am Rohr- oder Stabelement vorgesehenen gewindetragenden Teil vermieden werden kann, was unter Kostenreduzierung stabilitätserhöhend ist. Hier wird sowohl das entsprechend ausgestaltete Abstandsstück wie auch ein dieses verwendendes Gesamtsystem (insbesondere mit dem erfindungsgemäßen Zwischenstück zur Neigungserzielung) als jeweils für sich erfinderisch und beanspruchbar angesehen. Dabei wird dann bevorzugt z.B. durch nichtrotationssymmetrische Formschlussmittelpaare mit jeweils einem Paarteil auf Koordinatenmessmaschinenarmseite und Abstandsstückseite eine reproduzierbare Drehausrichtung gewährleistet.

Es ist bevorzugt, wenn das Drehkupplungselement gegen eine Anlagefläche gedrängt werden kann, insbesondere im Reibschluss. Auf diese Weise wird vermieden, dass bei Einsetzen des Zwischenelementes durch das Fixieren desselben am maschinennäheren Gegenstück eine Verdrehung während des Klemmens auftritt. Es ist durch eine solche Anordnung ohne Weiteres möglich, eine drehrichtungsfestlegende Einstellung vorzunehmen, die Fixierung zu bewirken und danach den Taststift an der Anlagefläche in Anlage zu bringen. Bevorzugt ist das Formschlussmittel als Gewindeloch gebildet, welches in die Anlagefläche ohne Weiteres einbohrt werden kann, insbesondere senkrecht. Diese Bohrung kann insbesondere vorgenommen werden, während ein zu bearbeitendes Halbfertig-Zwischenelement noch eingespannt ist. Alternativ kann anstelle eines Gewindeloches ein Durchfräsloch vorgesehen werden. Wenn dieses zur spielfreien Durchführung einer Befestigungsschraube oder dergleichen gebildet ist, wird eine formschlüssige Definition der Position und, nach Anziehen, ein Reibschluss erzielt.

Anstelle einer Ausbildung des Drehkuppelelements als Zapfen, welcher zum Beispiel mit Madenschrauben (vor-)fixiert werden kann, sind auch andere Möglichkeiten gegeben, welche allerdings nicht unter den Schutzumfang der beanspruchten Erfindung fallen. So kann zum Beispiel der Rohling direkt in eine Aufnahmeöffnung an einem maschinenseitigen Röhrchen oder Stab eingebracht oder dort fixiert werden, zum Beispiel durch Kleben. Geschieht dies unter Verwendung einer Lehre, mit der das - wiederum maschinenseitige - Ende des Röhrchens oder Stabs genau ausgerichtet werden kann, und ist durch Mittel am maschinenseitigen Ende des Röhrchens oder Stabs, wie zum Beispiel einem mit der Befestigungsstelle an der Maschine formkomplementäres Zapfen-Zapfenlochpaar, eine korrekte Befestigung gewährleistet, so kann auch in einem Koordinatenmessmaschinen nutzenden Betrieb selbst eine Verklebung oder dergleichen in exakt ausgerichteter Position erfolgen.

Es wird also kein separater Taststiftträger, wie er beispielsweise zur Erzielung einer radialen Beabstandung der Taststiftspitze vom Maschinenarm üblich ist, verwendet, sondern das erfindungsgemäße Element wird als fest verbundener, aber exakt dazu drehrichtungsmäßig ausgerichteter Teil verwendet.

Es wird auch beansprucht ein Verfahren zur Herstellung eines Zwischenelementes wie vorstehend beschrieben, bei welchem Verfahren Rohlinge mit einem Drehkupplungselement und wenigstens einer zur Drehkupplungselementachse allgemein parallelen Fläche hergestellt und die Rohlinge zur Erzeugung unterschiedlich geneigter Anlageflächen nach Bedarf abgefräst werden, wobei insbesondere nach Abfräsen ein jeweiliges Gewindeloch senkrecht die Anlagefläche eingebracht wird. Dass dabei bevorzugt das Drehkupplungselement für eine reproduzierbare Ausrichtung zum Maschinenarm gebildet ist, ist einleuchtend.

Als Fräsverfahren wird bevorzugt eine Planfräsung verwendet, wozu das Werkstück in einen Winkelhalter oder dergleichen eingespannt und/oder auf diesen aufgelegt wird, so dass durch die Definition der Auflagefläche Planfräsungen im richtigen Winkel vorgenommen werden. Es können entweder dedizierte Metallteile oder dergleichen als Winkelhalter oder Auflagen für die Planfräsung verwendet werden oder aber ein einstellbarer Halter. Die Verwendung eines einstellbaren Halters bietet Vorteile gegenüber dem Fall, bei welchem ein einzelnes Zwischenelement einstellbar sein müsste und erlaubt somit bei gleichen Kosten die Verwendung eines gegebenenfalls auch aufwendigeren Planfräshalters.

Typisch wird ein Rohling bereitgestellt, der vor Abfräsen im Bereich der zu bildenden Auflagefläche kugelförmig bzw. kugelsegmentförmig ist, was eine gleichbleibend große Auflagefläche unabhängig vom Neigungswinkel ermöglicht. Die Auflagefläche wird typisch nach Abfräsen weitgehend exakt der Auflagefläche des Taststiftbefestigungsendes entsprechen und im Übrigen (kreis-)rund sein. Die Kugelförmigkeit muss aber nicht zwingend vollständig und hundertprozentig rund sein, was geringe Fertigungskosten erlaubt. Der Rohling wird im Übrigen typisch gegenüber der zu bildenden Auflagefläche und parallel zur Kupplungselementachse mit einer Planfläche zur Auflage auf den Winkelhalter, das Einspannwerkzeug für das Planfräsen oder dergleichen ausgebildet sein. Dies kann auch die Ausrichtung der Drehstellung erleichtern.

Die Erfindung wird im Folgenden nur beispielsweise anhand der Zeichnungen beschrieben und in diesen ist dargestellt durch
- Fig. 1: eine Explosionsansicht der Taststiftbefestigung für eine Koordinatenmessmaschine mit einem erfindungsgemäßen Zwischenelement;

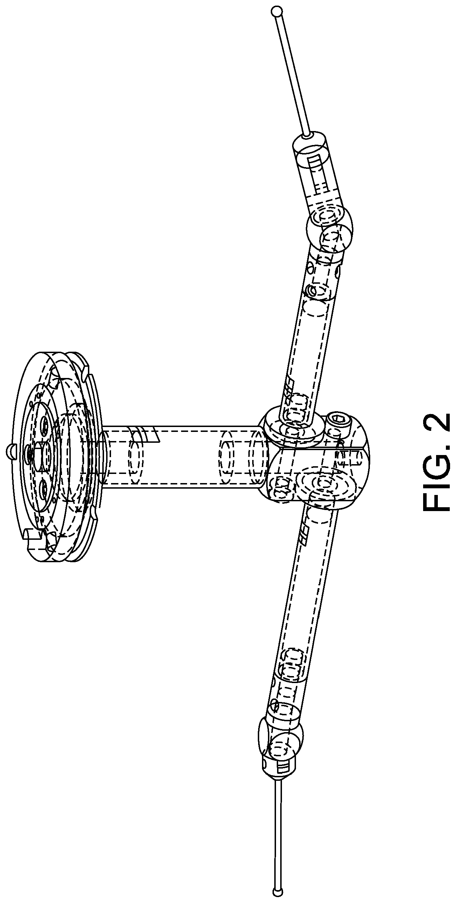

- Fig. 2: die Anordnung von Figur 1 im zusammengebauten, teilweise durchbrochenen Zustand;
- Fig. 3: die Anordnung von Figur 1 im zusammengebauten Zustand;
- Fig. 4: eine erste Darstellung des Zwischenelements der vorliegenden Erfindung in Explosionsansicht mit einem maschinenseitigen Gegenstück;

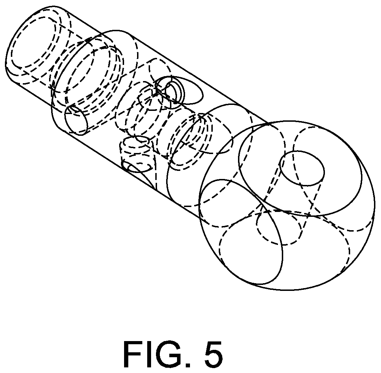

- Fig. 5: eine Ansicht der Elemente von Figur 4 im zusammengebauten, teilweise durchbrochenen Zustand;

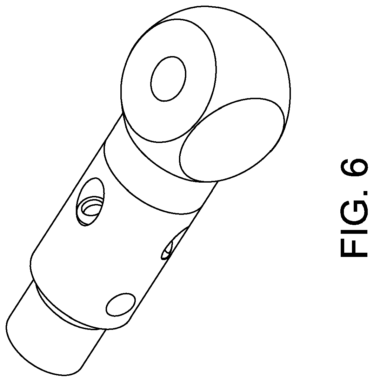

- Fig. 6: die Teile der Figur 4 bzw. 5 im nicht durchbrochenen Zustand;
- Fig. 7: ein Schnitt durch eine auszuführende Anordnung mit einem Zwischenelement und einem maschinenseitigen Gegenstück;
- Fig. 8: zwei sukzessive ausführliche Bearbeitungsschritte bei der Herstellung in schematisch angedeuteter Form, nämlich das Planfräsen des auf schräger Unterlage angebrachten Rohlings und das nachfolgende Bohren desselben senkrecht in die Anlagefläche;
- Fig. 9: eine Winkellehre zur Drehausrichtung des Zwischenelements bei eingeschnittenem Rohr;
- Fig. 10: eine Lehre zum Verkleben eines erfindungsgemäßen Zwischenelements unmittelbar in ein Abstandsstück.

Der besseren Übersichtlichkeit halber sei schon hier erwähnt, dass unten weitere Verbesserungen beispielhaft beschrieben werden unter Bezugnahme auf
- Fig. 11: eine Schnittansicht durch den Übergangsbereich von Auflagermittel und Übergangsstück;
- Fig. 12: eine Taststiftbefestigung für eine Koordinatenmessmaschine, entsprechend Fig. 3.
- Fig. 13: eine Explosionsansicht einer Taststiftbefestigung für eine Koordinatenmessmaschine mit einer Variante des erfindungsgemäßen Zwischenelements;
- Fig. 14: die Anordnung von Fig. 13 im zusammengebauten Zustand;
- Fig. 15a,b: Rohlinge für das erfindungsgemäße Zwischenelement der Fig. 13 und 14;
- Fig. 16a,b: das Zwischenelement der Fig. 15a bzw. 15b nach Herstellung der Anlagefläche.

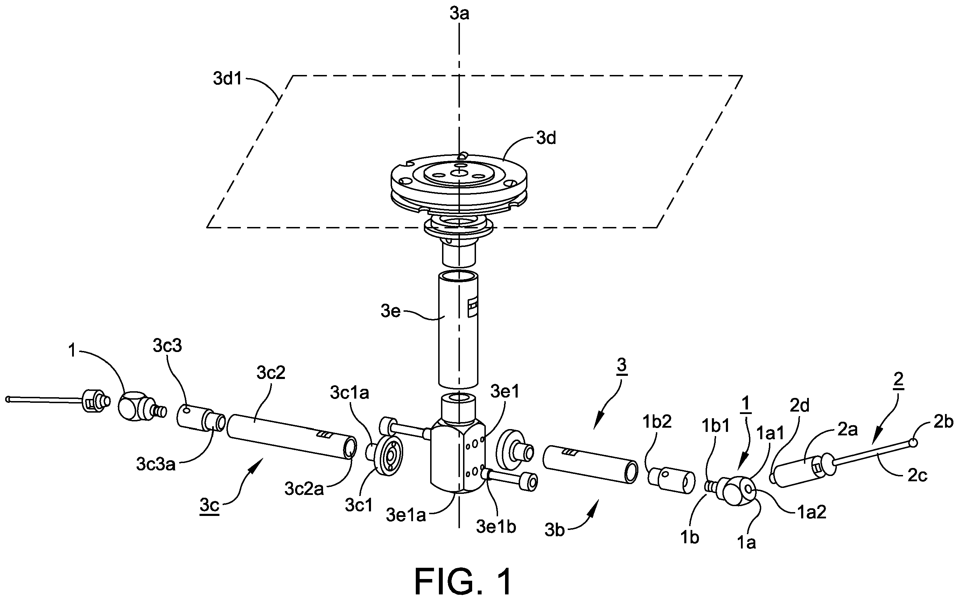

Nach Figur 1 umfasst ein allgemein mit 1 bezeichnetes Zwischenelement für die Anordnung eines Taststiftes 2 gegen den Taststiftträger 3 einer Koordinatenmessmaschine (nicht gezeigt) ein Taststiftende 1a und ein Maschinenende 1b, wobei das Maschinenende 1b mit einem Drehkupplungselement 1b1 versehen ist und wobei das Taststiftende 1a mit einer gegen die Drehkupplungsachse 1b2 geneigten Anlagenfläche 1a1 und einem Formschlussmittel 1a2 für den formschlüssigen Eingriff mit einem Befestigungsende 2a des Teststiftes 2 in Anlage der Anlagefläche 1a1 ausgebildet ist.

Der Taststiftträger 3 weist im vorliegenden Fall allgemein entgegengesetzt radial von einer Koordinatenmessmaschinenarmachse 3a abstehende Ansätze 3b, 3c auf. Der Koordinatenmessmaschinenarm ist zur Koordinatenmessmaschine hin mit einer tellerartigen Platte 3d versehen, die dazu ausgebildet ist, auf die Berührung eines Werkstückes (nicht gezeigt) mit einer Tastspitze 2d anzusprechen und ein Signal zu erzeugen, wenn die tellerartige Platte 3d aus der Ebene 3dl gehoben wird, was durch Druck in axialer Richtung der Achse 3a oder durch Druck quer dazu geschehen kann.

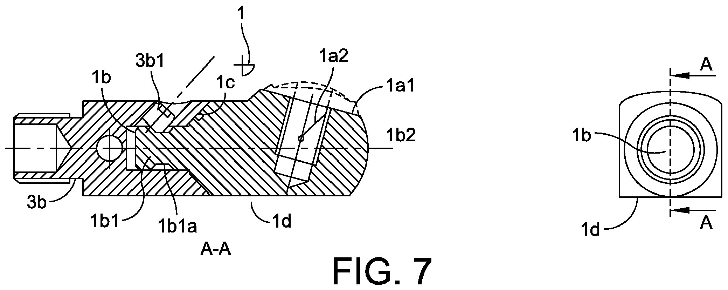

Der Taststift 2 weist im vorliegenden Ausführungsbeispiel eine hier mit einer Aluminiumoxidkugel, beispielsweise einer Rubinkugel, gebildete Tastspitze 2b auf, wobei die Kugel 2b an einem Stab 2c aus hinreichend starrem und temperaturunempfindlichem, d.h. sich mit Temperaturänderungen allenfalls marginal dehnenden Material 2c wie Hartmetall, Keramik oder Kohlenstofffaserverbundmaterial (CFK) gebildet ist. Der Stab ist wiederum auf einer metallischen Verdickung 2a, um Beispiel aus Edel- oder Werkzeugstahl beziehungsweise Titan angeordnet, die maschinenseitig ein Gewinde 2d aufweist, das zum formschlüssigen Eingriff mit einem Gewindeloch 1a2 vorgesehen ist. Das Gewindeloch 1a2 ist im Zwischenelement 1 senkrecht in die Anlagefläche 1a1 gebohrt, vergleiche Figur 7.

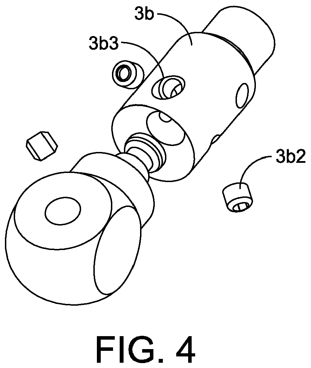

Das Zwischenelement 1 ist, wie aus Figur 1 ersichtlich, an einem radial von einem Armansatz 3e abstehenden Element angeordnet, wobei dieses Element zum Zwischenelement 1 der vorliegenden Erfindung hin eine Aufnahme für den Zapfen 1b, der das Drehkupplungselement 1b bildet, aufweist. Der Zapfen 1b ist mit einer umlaufenden Rille 1b1a versehen, die wiederum an ihren Flanken 1b1b so abgeschrägt ist, dass ein im Gegenstück 3b vorgesehenes Drängmittel 3b1 in die Drehzapfenaufnahme hineingedrängt werden kann, hier in Form einer Madenschraube 3b2, vgl. Figur 4, die in ein entsprechendes Gewinde 3b3 eindringt. Das Zwischenelement 1 ist mit einer um den Umfang umlaufenden Schrägschulter 1c versehen, welche an einer komplementär geformten Anlagefläche im Gegenstück 3b um die Zapfenaufnahme herum vorgesehen ist. Das Gegenstück 3b für die Befestigung des erfindungsgemäßen Zwischenelements 1 ist hier aus Metall gebildet und weist maschinenendseitig hier eine zu einem GFK- oder CFK-Rohr passende Verklebefläche auf, das hinreichend temperaturstabil ist. Es können hier beliebige übliche maschinenseitige Teile vorgesehen werden. Das Zwischenelement 1 hat eine allgemein auf der gegenüberliegenden Seite der Anlagefläche 1a1 vorgesehene ebenen Rückenfläche 1d, vergleiche Figur 7, die allgemein parallel zur Achse 1b2 des Drehkupplungszapfens 1b liegt.

Das taststiftseitige Ende des Zwischenelementes 1 ist um die Anlagefläche herum gerundet, wobei ein Rohling eine allgemeine Kugelsegmentform im Bereich der zukünftigen Anlagefläche aufweist. Der entsprechende Kugelsegmentbereich der entsprechenden Rohlingsform ist dabei dergestalt, dass die Kugel beziehungsweise das Kugelsegment, welche/s zur Bildung der Auflagefläche 1a1 abfräsbar ist, mit Neigung sowohl weg vom Maschinenarm als auch hin zu diesem gebildet werden kann. Mit anderen Worten liegt der Mittelpunkt des Kugelradius etwas beabstandet von der Drehkupplungselementachse, wie in Figur 7 durch Radius r angedeutet. Der Rohling ist dabei im kreisförmigen Kugelsegmentbereich so dimensioniert, dass durch Abfräsen eine Auflagefläche für den Taststift mit jenem Durchmesser gebildet wird, der für den Taststift als Auflagefläche benötigt wird.

Das Gewindeloch 1a2 ist hier ein Normgewindeloch für Normgewinde von Taststiften, die Auflagefläche um dieses Gewindeloch ist entsprechend der üblichen Taststiftform um das Gewinde herum vorliegend eben gestaltet.

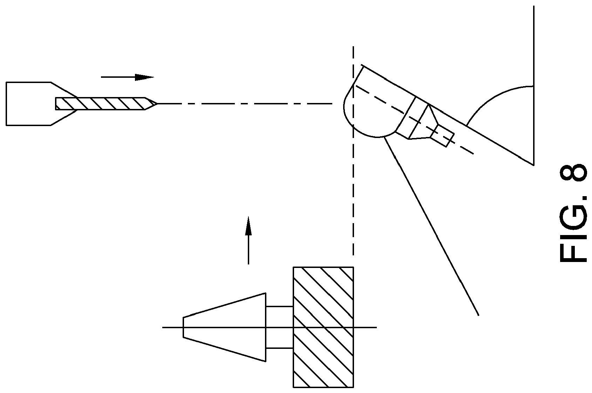

Die Anordnung wird verwendet wie folgt:
Zunächst werden Zwischenelementrohlinge hergestellt, die einen gerillten Drehkupplungselementzapfen, eine ebene Auflagefläche 1d sowie einen kugelkalottenförmigen Bereich aufweisen, aus welchem durch Abfräsen die Anlagefläche für einen geneigt zu einem Taststiftträger 3 einer Koordinatenmessmaschine angeordneten Taststift gebildet werden kann. Diese Rohlinge werden in größeren Stückzahlen serienartig identisch gefertigt und an Benutzer einer Koordinatenmessmaschine versandt. Dort wird für eine geeignete gegebene Messaufgabe eine gewünschte Taststiftgeometrie ermittelt, was typisch unter Verwendung von CAD-Programmen geschieht. Die Zwischenelemente lassen sich dabei ohne Weiteres als CAD-Elemente definieren. Entsprechend der aufgaben- bzw. anwendungsgemäßen Definition des Neigungswinkels wird dann eine Winkelhalterlehre vorbereitet, in bzw. auf die ein einzelner Rohling oder eine Vielzahl identischer Rohlinge auf- bzw. eingelegt wird und es wird eine Planfräsung zur partiellen Entfernung der Kugelkalotte bis auf den gewünschten Neigungswinkel vorgenommen. In die so gebildeten planen Flächen werden dann Gewindelöcher senkrecht eingebracht. Durch die Verwendung eines geeigneten Winkelhalters ist dies ohne großen apparativen Aufwand möglich, vergleiche Figur 8.

Danach kann das fertige Zwischenelement zunächst maschinenendseitig in die Zapfenaufnahme eingesetzt, ausgerichtet und danach durch die Madenschrauben, die äquidistant in den Umfang herum verteilt sind, beispielsweise durch hier drei Madenschrauben, in die gewünschte Lage klemmend bzw. reibschlüssig gedrängt werden. Die Drehausrichtung selbst erfolgt dabei mit nur geringer Kraft, solange die Schrauben noch nicht angezogen sind. Die Einstellung kann somit mit hoher Genauigkeit vorgenommen werden. Durch ein sukzessives Anziehen der Madenschrauben ist eine korrekte Ausrichtung ohne Probleme möglich.

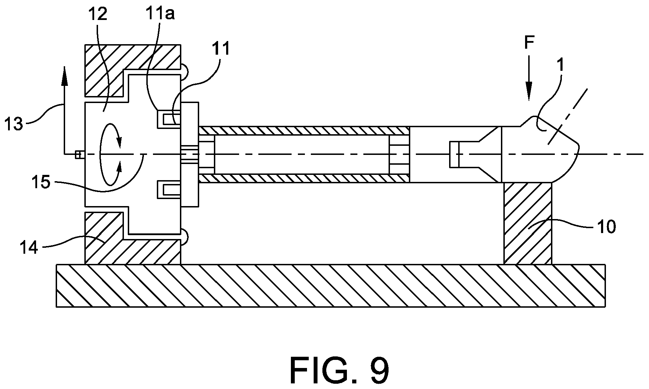

Fig. 9 zeigt, dass das Element 3c in eine Drehlehre eingesetzt werden kann, die einerseits die Lage einer Abflachung am Zwischenelement 1 durch ein Auflager 10 exakt definiert und andererseits über eine Komplementärformung 11 mit Zapfen-/Zapfenlochpaar wie am Maschinenarm bei 3ela beziehungsweise 3elb die Lage des Zwischenstücks 3c auch hinsichtlich der Drehausrichtung exakt festlegt.

Die Lehre ist dabei so gebildet, dass die hier die Aufnahme 11a für die Zapfen am Auflagermittel 3c1 des Abstandsstücks 3c in einem drehbaren Element 12 vorgesehen ist, das praktisch spielfrei gedreht werden kann, wobei es mittels eines über einer um den Umfang herum angebrachten Winkelskala beweglichen und mitbewegten Zeigers 13 exakt einstellbar ist. Es versteht sich, dass der im Querschnitt gezeigte Körper 12 und dessen Auflagerung 14 relativ zueinander drehbar sind, also Rotationssymmetrie um die angedeutete Achse 15 insoweit gegeben ist.

Danach kann, falls gewünscht, eine Festlegung der Drehstellung auch über jenes Maß hinaus, das durch die Madenschrauben bereits gewährleistet ist, vorgenommen werden. Dies kann beispielsweise mittels Klebstoff geschehen. Dazu kann, abweichend vom vorstehend Beschriebenen, beispielsweise Klebstoff eingebracht werden in den Bereich zwischen Zwischenelement und Aufnahme, wobei ein Klebstoff gewählt werden wird, der langsamer aushärtet als die für das Einstellen der Drehausrichtung erforderliche Zeit; alternativ kann ein Klebstoff verwendet werden, der beispielsweise erst unter Wärme aushärtet, wobei die Anordnung, etwa mittels eines Warmluftgebläses, nach Ausrichtung der Drehstellung erwärmt werden kann.

Alternativ und/oder zusätzlich ist es möglich, andere Verbindungsmethoden vorzusehen, wie ein WIG-Schweißen o.ä. an einem oder mehreren Punkten, um den Umfang des Zwischenelement-Aufnahmestück-Übergangsbereichs. Alternativ und/oder zusätzlich kann auch eine Bohrung durch Element 3b hindurch bis in das Zwischenelement hinein mittels eines einfachen beispielsweise batteriebetriebenen, kleinen Bohrers vorgenommen werden, und dann ein Taststift oder dergleichen eingesetzt werden. Auch dies sorgt für eine Fixierung der Drehrichtung.

Für ein Drehkupplungselement der vorliegenden Erfindung kann es also, je nach Wunsch des Anmelders, bereits genügen, wenn eine einmalige Drehausrichtung ermöglicht wird und ansonsten eine drehrichtungsreproduzierende Maschinenanbringung gewährleistet ist.

Anschließend wird der Taststift eingeschraubt, der nun eine exakt definierte gewünschte Neigung besitzt.

Es sei darauf hingewiesen, dass gegebenenfalls der Bereich um den Drehkupplungselementzapfen mit Markierungen versehen sein kann, die eine Drehausrichtung relativ zur maschinenendseitigen Aufnahme erleichtern, falls dort ebenfalls eine Gegenmarkierung vorgesehen ist. Beispielsweise kann eine 5°- oder 10°-Einteilung ohne Weiteres auf dem Rohling vorgesehen werden. Die maschinenseitige Aufnahme kann ebenfalls eine Markierung aufweisen, z.B. noniusartig.

Dass gegebenenfalls der maschinenseitige Bereich auch als Rundzylinder mit einer Abflachung gebildet sein kann, die mit einer entsprechenden Abflachung an der maschinenseitigen Aufnahme korrespondiert, sei erwähnt. Dies erlaubt es, durch einfaches Inübereinstimmungbringen der Abflachungen, eine Ausrichtung der Drehstellung zu gewährleisten. Die Abflachung kann z.B., ähnlich der Neigung, ebenfalls durch Planfräsen auf einer geeigneten Unterlage zur Fertigungslehre, bewirkt werden.

Dies ist dann sinnvoll, wenn sichergestellt ist, dass die maschinenseitige Abflachung auf dem Stiftträger 3 ihrerseits eine reproduzierbare Ausrichtung zur Koordinatenmessmaschinenarmachse besitzt. Dies ist zwar nicht ohne Weiteres gewährleistet. Solange dies nicht gewährleistet ist, können durch die vorliegende Erfindung aber trotzdem schon Vorteile erzielt werden; auch eine Abflachung kann dann noch vorteilhaft sein, wenn zumindest die Zwischenelemente jeweils mit gleichliegender Abflachung gebildet sind, weil dann, unabhängig von der absoluten Lage relativ zur Koordinatenmessmaschinenarmachse zumindest bis zu einem Wechsel des Stiftträgers 3 eine Reproduzierbarkeit gewährleistet ist.

Es ist jedoch auch mit einfachen Mitteln möglich und bevorzugt, wenngleich nicht zwingend, wenn auch die Drehausrichtung des Zwischenelements noch präzise festgelegt wird. Dazu zeigt die Erfindung verschiedene Maßnahmen auf. Wie in Fig. 1 gezeigt und wie zuvor beschrieben, weist der Taststiftträger zwei radial von einer Koordinatenmessmaschinenarmachse 3a abstehende Ansätze 3b, 3c auf; dass in Fig. 1 zwei derartige Ansätze an einem Arm gezeigt sind, ist im Übrigen nur beispielhaft und nicht zwingend, es können auch weniger oder mehr Ansätze vorgesehen sein. Wichtig ist nun, dass, wie beispielhaft an Element 3c erläutert werden soll, die Ansätze typisch mehrteilig gebildet sind, nämlich in der Regel mit einem maschinenarmseitigen Auflagemittel 3c1, welches an einer maschinenarmseitigen Auflagefläche, dargestellt für den Ansatz 3b als Auflagefläche 3e1, aufliegt, und weg von der Koordinatenmessmaschinenarmachse in ein Abstandsstück 3c2 übergeht und mit diesem fest verbunden ist, wobei am Abstandsstück 3c2 zum Taststift hin wiederum die Aufnahme 3c3 für das Zwischenelement 1 der vorliegenden Erfindung vorgesehen ist. Typisch wird die Aufnahme 3c3 und das Auflagermittel 3cl aus Werkzeugstahl, Edelstahl oder dergleichen gebildet sein, während das Abstandsstück 3c2 aus Titan, Werkzeugstahl, Hartmetall, Kohlenstofffaserverbundwerkstoffen, Glasfaserverbundwerkstoffen und dergleichen bestehen kann.

Es sind nun unterschiedliche Verfahren im Stand der Technik üblich, um das Abstandsstück 3c2 mit dem Auflagermittel 3cl beziehungsweise der Aufnahme 3c3 zu verbinden. Zum einen besteht die Möglichkeit, Bohrungen im Abstandsstück 3c2 einzubringen und die Aufnahme 3c3 beziehungsweise das Auflagermittel 3c1 mit Zapfen oder dergleichen 3c3a beziehungsweise 3cla zu versehen, die in die jeweiligen Bohrungen, angedeutet bei 3c2a, eindringen und mit diesen beispielsweise verklebt werden. Eine derartige Verklebung ist zwar aus Gründen der Stabilität generell weniger bevorzugt, bietet aber für die Anwendung der Erfindung den Vorteil, dass die miteinander zu verbindenden Elemente 3cl, 3c2 und 3c3 gegeneinander bis zur Aushärtung des Klebstoffs ohne Weiteres bewegt und insbesondere verdreht werden können. Wenn nun auf der Auflagerfläche 3e1 des Maschinenarms zwei komplementäre Zapfenlöcher 3ela, 3elb vorgesehen werden und die Auflagermittel 3cl mit komplementären, in die Zapfenlöcher 3ela, 3elb spielfrei oder nahezu spielfrei eindringenden Zapfen ausgestattet wird, so ergibt sich eine definierte, reproduzierbare Drehausrichtung des starren Abstandsstücks 3c. Dies kann ausgenutzt werden, um bei der Verbindung der Elemente 3e1, 3c2 und 3c3 eine korrekte und reproduzierbare Winkellage einer wie vorstehend beschrieben maschinenendseitigen Abflachung in der maschinenseitigen Aufnahme 3c3 zu erzielen. Dazu wird beispielsweise zunächst das Abstandsstück 3c2 fest mit dem Auflagermittel 3c1 verklebt und danach in eine Lehre eingespannt, die einerseits eine exakte Ausrichtung der Abflachung der Aufnahme 3c3 gewährleistet und es andererseits ermöglicht, dass in einer ineinandergesteckten Position von Aufnahme 3c3 und Abstandsstück 3c2 eine korrekte Lage erzielt wird. Dies ist dann vorteilhaft, wenn gewährleistet ist, dass bei einem Endanwender regelmäßig eine bestimmte Drehausrichtung sehr oft auftritt, so dass mit insoweit festen Abstandsstücken gearbeitet werden kann.

Dass hier, wie ersichtlich, eine direkte Verbindung von Abstandsstück 3c2 und Aufnahme 3c3 mit den zum Drängen des Drehkupplungselementes dienenden Zapfen des Zwischenstücks in das Zapfenloch dienenden Drängmitteln erfolgt, sei als vorteilhaft herausgestellt.

Wenn, was aus Gründen der höheren Qualität bevorzugt ist, die Verbindungen zwischen Abstandsstück 3c2 mit einerseits der Aufnahme 3c3 und andererseits dem Auflagermittel 3c1 nicht durch einfaches Kleben, sondern durch Einschneiden von Gewinden erfolgen soll, ist eine derartige Drehausrichtung bei der Fertigung nicht ohne Weiteres möglich. Hier besteht aber die Möglichkeit, zunächst die Verbindung zwischen den Elementen 3c1, 3c2 und 3c3 fest herzustellen und danach erst in die Aufnahme 3c3 die Auflagefläche einzuarbeiten, was wiederum durch Abfräsen ein einer geeigneten Lehre, bei der durch die Zapfenlage der Zapfen des Auflagermittels 3c1 eine reproduzierbare Position gewährleistet ist, herzustellen. Im Übrigen sei erwähnt, dass anstelle von Zapfen in dem Auflagermittel 3c1 und Zapfenlöchern im Gegenstück auch die komplementäre Umkehrung verwendbar wäre oder andere, geeignete, eine leichte Reproduzierbarkeit einer Drehausrichtung ermöglichende Mittel und Maßnahmen vorgesehen werden können.

Ein in gewünschter Ausrichtung mit eingeschnittenem Rohr wie vorstehend beschrieben versehenes Abstandsstück 3c kann dann zur Erzielung einer korrekten Drehausrichtung in eine Lehre, wie in Fig. 9 gezeigt, eingesetzt werden.

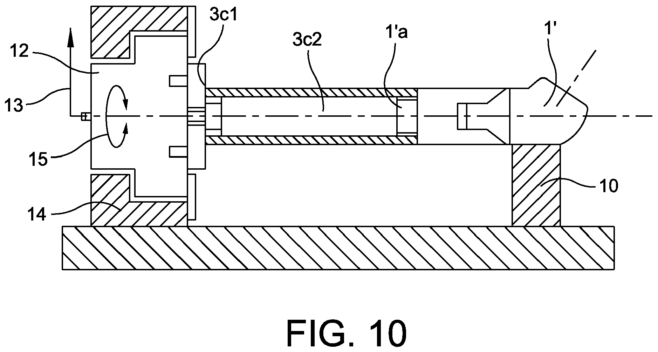

Eine Lehre ähnlich wie in Fig.9 kann auch verwendet werden, wenn, was gegebenenfalls bei geringeren Qualitätsanforderungen möglich ist, eine unmittelbare Verklebung des Zwischenelements 1 mit dem hier rohrförmigen Abstandsstück 3c2 erfolgen soll. Dargestellt ist dazu in Fig. 10 ein Zwischenelement l' welches über einen einfachen, rotationssymmetrischen Zapfen l'a passgenau im Rohr 3c2 aufgenommen wird. Diese Ausführungsform ist zwar womöglich nicht ganz so stabil wie die zuvor beschriebene, ist jedoch, schon aufgrund der Vereinfachung gegenüber den vorbeschriebenen Ausführungsbeispielen durch Wegfall der Klemmpassung mit Madenschrauben und dergleichen noch kostengünstiger.

Demnach wurde vorstehend also beschrieben ein Zwischenelement für die Anordnung eines Taststiftes geneigt gegen den Taststiftträger einer Koordinatenmessmaschine, aufweisend ein Taststiftende und ein Maschinenende, wobei das Maschinenende mit einem Drehkupplungselement und das Taststiftende mit einer gegen die Drehkupplungsachse geneigten Anlagefläche und einem Form - oder Reibschlussmittel für den form- und/oder reibschlüssigen Eingriff mit einem Befestigungsende des Taststiftes in Anlage an der Anlagefläche ausgebildet ist.

Es wurde weiter beschrieben ein Zwischen-element wie in der vorstehenden Variante angegeben, das mit einem einstückigen Grundkörper gebildet ist.

Es wurde weiter beschrieben ein Zwischen-element wie in einer der vorstehenden Varianten angegeben, wobei das die geneigte Anlagefläche vom Grundkörper abgefräst ist.

Es wurde weiter beschrieben ein Zwischen-element wie in einer der vorstehenden Varianten angegeben, wobei das Drehkupplungselement als Zapfen ausgestaltet ist, der zur Aufnahme in ein Zapfenlager ausgebildet ist, bevorzugt als ein in eine Zapfenlochaufnahme einklebbarer Zapfen.

Es wurde weiter beschrieben ein Zwischen-element wie in einer der vorstehenden Varianten angegeben, wobei der Zapfen eine Eintiefung, bevorzugt eine Rille aufweist, mit welcher das Zwischenelement durch ein Fixiermittel gegen eine Anlagefläche drängbar ist.

Es wurde weiter beschrieben ein Zwischenelement wie in einer der vorstehenden Varianten angegeben, wobei das Form -oder Reibschlussmittel als Gewindeloch gebildet ist, in welches der Taststift einschraubbar ist.

Es wurde weiter beschrieben ein Zwischenelement wie in einer der vorstehenden Varianten angegeben, wobei das Gewindeloch senkrecht in die Anlagefläche gebohrt ist.

Es wurde weiter beschrieben ein Verfahren zur Herstellung einer Vielzahl von Zwischenelementen wie in einer der vorstehenden Varianten angegeben, wobei Rohlinge mit einem Drehkupplungselement und wenigstens einer zur Drehkupplungselementachse allgemein parallelen Fläche hergestellt und die Rohlinge zur Erzeugung unterschiedlich geneigter Anlageflächen nach Bedarf abgefräst werden, wobei insbesondere nach Abfräsen ein jeweiliges Gewindeloch oder ein Durchfräsloch für eine Befestigungsschraube senkrecht die Anlagefläche eingebracht wird.

Es wurde weiter beschrieben ein Verfahren wie in der vorstehenden Variante angegeben, wobei der Rohling in einem Winkelhalter eingespannt und/oder aufgelegt wird und dann plangefräst wird.

Es wurde weiter beschrieben ein Verfahren wie in einer der vorstehenden Varianten angegeben, wobei ein Rohling bereitgestellt wird, der vor Abfräsen im Bereich der auszubildenden Anlagenfläche allgemein kugelförmig ist.

Es wurde weiter beschrieben ein Rohling zur Ausführung eines Verfahrens wie in einer der vorstehenden Varianten angegeben.

Es wurde weiter beschrieben ein Abstandstück zur Aufnahme des weiterbearbeiteten Rohlings, mit Mitteln zum Drängen des gegebenenfalls bearbeiteten Rohlings in eine drehrichtungsfixierende Lage und/oder einer Aufnahme zur Aufnahme des gegebenenfalls bearbeiteten Rohlings in drehrichtungsfixierender Klebung.

Bei der Anbringung von Zwischenelementen, die geneigte Taststifte tragen, ist, wie ausgeführt wurde, deren korrekte Ausrichtung zu bewirken. Eine korrekte Ausrichtung muss daher auch gewährleistet sein zwischen einem Übergangsstück vom Koordinatenmessmaschinenarm zum Taststift bzw. dessen Auflagermittel am Übergangsstück.

Dabei ist zu beachten, dass die Taststifte regelmäßig zu wechseln sind und insbesondere trotz einer Vielzahl von Wechseln dauerhaft noch sichergestellt sein muss, dass eine korrekte Anordnung erhalten wird.

Wie beschrieben wurde, ist zur Taststiftbefestigung ein Auflagermittel vorgesehen, das beispielsweise ein Metall-, Carbon-, Keramik- oder sonstiges Rohr trägt, welches wiederum mit wie vor angegebenen, die Taststiftneigung bewirkenden Elementen verbunden ist. Wird dieses Auflagermittel nicht korrekt zum Übergangsstück ausgerichtet, ergibt sich die gewünschte korrekte Ausrichtung des Taststiftes nicht.

Die vorliegende Verbesserung zielt mit dem jetzt beschriebenen Aspekt darauf, die korrekte Ausrichtung noch weiter zu erleichtern.

Die vorliegende Offenbarung schlägt somit in einem weiteren Grundgedanken der Verbesserung ein Auflagermittel zur Anbringung eines insbesondere an einem Zwischenelement wie vorstehend angegeben vorgesehenen Taststiftes an einem Obergangsstift vor. Dabei ist vorgesehen, dass das Auflagermittel anpresskraftfreie Formschlusselemente zur eindeutigen Orientierung des Auflagermittels auf deren anpresskräftefreien Formschluss mit Komplementärelementen am Übergangsstück aufweist.

Einwesentlicher Grundgedanke der Verbesserung besteht somit darin, einerseits eine korrekte Orientierung des Auflagermittels und somit des dadurch aufgelagerten Taststiftes durch Formschlusselemente gewährleisten zu können, die zwar eine eindeutige Orientierung ermöglichen, also insbesondere nicht rotationssymmetrisch sind, aber andererseits dafür zu sorgen, dass die Formschlusselemente bei Auflagerung am Übergangsstück anpresskraftfrei bleiben. Dies stellt sicher, dass die Formschlusselemente nicht durch gegebenenfalls hohen Anpressdruck belastet und deformiert und somit fehlerbehaftet, ungenau und/oder unbrauchbar werden.

Es ist möglich und bevorzugt, dass mindestens zwei unterschiedlich geformte Formschlusselemente vorgesehen sind, die mit jeweiligen Komplementärelementen am Übergangsstück zusammenwirken. Indem unterschiedlich geformte Formschlusselemente verwendet werden, ist eine besonders einfache Orientierung möglich, die auch unter hohem Arbeitsstress eine fehlerfrei korrekte und somit reproduzierbare Taststiftmontage ermöglichen.

Die unterschiedlich geformten Formschlusselemente werden bevorzugt so mit ihrem jeweiligen Komplementärelement zusammenwirken, dass sie nacheinander in Eingriff treten, insbesondere durch unterschiedlich weit vorstehende Vorsprünge. Es gelangtalso zunächst das erste Formschlusselement-Komplementärelement-Paar in Eingriff und erst danach das zweite. Dies ist vorteilhaft, weil auf diese Weise eine durch gekippte Annäherung gegen die Aufsteckachse bedingte Verkantung mit Gefahr der Formschlusselementbeschädigung eher vermieden werden kann, z.B. durch Abrundung oder Anfasung der Vorsprünge.

Es sei im Übrigen darauf hingewiesen, dass die unterschiedlich weit vorstehenden Vorsprünge auf wahlweise dem Auflagermittel und/oder dem Übergangsstück vorgesehen sein können. Es sei aber weiter darauf hingewiesen, dass dessen ungeachtet nachfolgend primär von Vorsprüngen auf dem Auflagermittel gesprochen wird; dies soll jedoch nicht die Offenbarung begrenzen, sondern vielmehr das Verständnis der Offenbarung erleichtern, indem nicht bei jeder sich bietenden Gelegenheit die jeweiligen Formschlusselement-Komplementärelement-Paarungsalternativen neuerlich erwähnt und erörtert, sondern nach Vorstehendem als einleuchtender Weise stets vorhanden unterstellt werden.

Bevorzugt ist es, wenn wenigstens jenes Formschlusselement, das als erstes mit seinem Komplementärelement am Übergangsstück in Eingriff tritt, ein Rundelement ist, das mit seinem zugeordneten Komplementärelement ein Rundzapfen-Rundloch-Paar bildet. Dies erlaubt es, zunächst einen Eingriff des weiter vorstehenden Rundzapfen-Rundloch-Paares bei Aufstecken des Auflagermittels auf das Übergangsstück herbeizuführen, dann eine drehende Justierung des Auflagermittels um die Achse des Rundzapfen-Rundloch-Paares unter allmählicher Annährung mit allenfalls geringem Druck zwischen Auflagermittel und Übergangsstück zu bewirken und zwar bis zum Eingriff des oder der weiteren Formschlusselemente-Komplementärelemente auf Auflagermittel und Übergangsstück und erst hernach die feste Verbindung in der korrekten Ausrichtung herbeizuführen, was dann leicht möglich ist.

Es ist bevorzugt, wenn wenigstens zwei Formschlusselemente mit den jeweils zugeordneten Komplementärelementen Rundzapfen-Rundloch-Paare bilden und beide Rundzapfen-Rundloch-Paare einen jeweils unterschiedlichen Durchmesser besitzen. Die Ausbildung auch des zweiten Formschlusselemente-Komplementärelemente-Paares als Rundzapfen-Rundloch-Paares hat auf Grund der einfachen Erzeugbarkeit der geometrischen Formen fertigungstechnische Vorteile und senkt so die Kosten.

Bevorzugt wird das Auflagermittel am Übergangsstück angeschraubt, wozu bevorzugt im Auflagermittel ein der Befestigung dienendes Gewindeloch vorgesehen ist, in welches eine durch das Übergangsstück laufende Schraube treten kann. Damit diese am Übergangsstück problemfrei unverlierbar gehalten werden kann, kann das Übergangsstück zur Schraubensicherung ein Gewindeloch aufweisen, durch welches die nur in ihrem vorderen Bereich mit Gewinde versehene Befestigungsschraube gedreht werden kann. Falls dieses Sicherungsgewindeloch am Übergangsstück nahe der Grenzfläche zum Auflagermittel angeordnet ist, wird es bevorzugt, wenn das Befestigungs-Gewindeloch im Auflagermittel so weit eingetieft ist, dass ein Aufsetzen des Auflagermittels auf dem Übergangsstück vor Eingriff der Schraube ermöglicht ist.

Es ist bevorzugt, wenn Anpressflächen zum Anpressen des Auflagermittels gegen das Übergangsstück definiert vorgesehen sind, insbesondere als Vorsprünge oder als einzelner, umlaufender Vorsprung, wobei die derartigen Flächen insbesondere randnah am Auflagermittel angeordnet sind.

Die Verbesserung wird im Folgenden nur beispielsweise unter Bezugnahme auf die Zeichnung beschrieben. In dieser ist dargestellt durch:

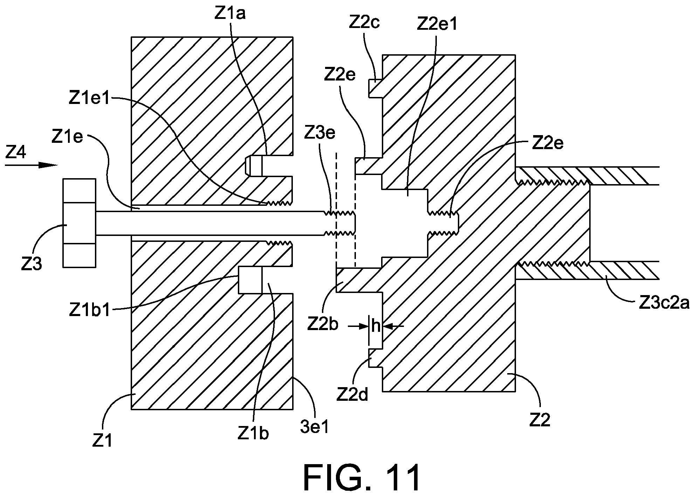

- Fig. 11: eine Schnittansicht durch den Übergangsbereich von Auflagermittel und Übergangsstück;

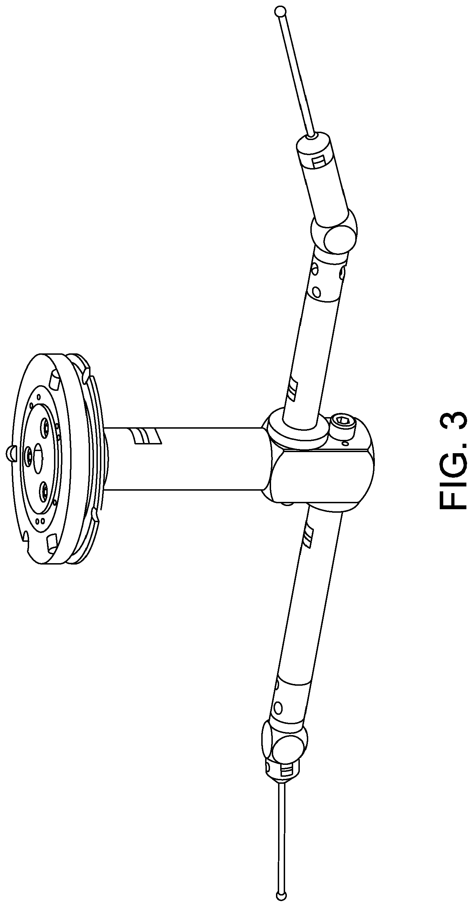

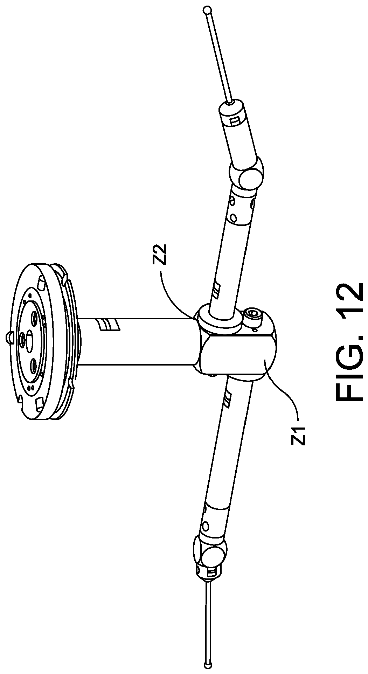

- Fig. 12: eine Taststiftbefestigung für eine Koordinatenmessmaschine, entsprechend Fig. 3 der Hautpanmeldung.

In Fig. 12 ist das Übergangsstück als 21 bezeichnet, das Auflagermittel als Z2. Die Funktion und Anordnung der weiteren dargestellten Teile erschließt sich dem Fachmann aus der entsprechenden Figurenbeschreibung wie vorstehend bereits angegeben, soweit dies überhaupt erforderlich ist.

Nach Fig. 11 ist das Auflagermittel Z2 vorgesehen, um an einem Übergangsstück Z1 einen Taststift zu befestigen, der insbesondere an einem Zwischenelement wie vorstehend bereits angegeben, angeordnet werden kann und von welchem vorliegend nur ein mit Bezugszahl 3c2a bezeichneter Teil eines Hohlrohres dargestellt ist, das auf einem Ansatz des Auflagermittels angeklebt oder auf andere Weise wie vorstehend bereits angegeben, beschrieben angebracht ist.

Das Auflagermittel Z2 weist Formschlusselemente Z2a, Z2b auf, die zur eindeutigen Orientierung des Auflagermittels bei Formschluss mit Komplementärformschlusselementen Z1a, Z1b am Übergangsstück Z1 so ausgebildet sind, dass sie anpresskräftefrei in Formschluss treten können.

Das Auflagermittel Z2 ist vorliegend, wie aus Fig. 12 erkennbar, als allgemein rundes Element gebildet, wobei nahe am äußeren Umfang der dem Übergangsstück zugewandten Seite des Auflagermittelfläche ein umlaufender Vorsprung Z2c in Richtung auf das Übergangsstück vorgesehen ist, der über die zum Übergangsstück 21 gewandte Oberfläche Z2d um eine Höhe h übersteht.

Die Zapfen Z2a und Z2b sind beide Rundzapfen, genauso wie die komplementären Zapfenlöcher Z1a, Z1b im Übergangsstück Rundlöcher sind. Die Zapfen Z2b und Z2a besitzen unterschiedliche Durchmesser, so dass der Zapfen Z2b nicht in das Zapfenloch Z1a gesetzt werden kann und umgekehrt der Zapfen Z2a großes Spiel im Zapfenloch Z1b besitzen würde. Überdies erstreckt sich der dickere Zapfen Z2b im Vergleich zum Zapfen Z2a um einen bei Aufsetzen merklichen Abstand weiter weg von der dem Übergangsstück Z1 zugewandten Oberfläche des Auflagermittels Z2. Das Zapfenloch Z1b ist tiefer, als es zur Aufnahme des Zapfens Z2b erforderlich ist. Mit anderen Worten dringt die Stirnfläche des Zapfens Z2b nicht bis zum Zapfenlochgrund Z1b1 des Zapfens Z1b vor. Gleiches gilt für die Tiefe des Zapfenlochs Z1a, die größer ist als die Höhe des Zapfens Z2a über der Oberfläche der dem Übergangsstück Z1 bei Benutzung zugewandten Seite des Auflagermittels Z2. Auch der Zapfen Z2a gelangt somit bei Aufsetzen des Auflagermittels auf das Übergangsstück nicht bis in den Grund des Zapfenloches.

Das Übergangsstück Z1 ist mit einem Durchgangsloch Z1e versehen, an dessen dem Auflagermittel zugewandeten Ende ein Gewinde Z1e1 eingeschnitten ist und welches so bemaßt ist, dass eine Schraube Z3 zum Festschrauben des Auflagermittels Z2 am Übergangsstück Z2 durch das Durchgangsloch Z1e bis zum Gewinde Z1e1 vorgeschoben werden kann, dort mit ihrem nur am Vorderende versehenen Gewinde Z3a durch das Gewindeloch Z1e1 gedreht werden kann, danach unverlierbar gehalten ist und mit geringem axialem Spiel vorsteht. Das Auflagermittel weist ein Gewindesackloch Z2e auf, welches eingetieft von der dem Übergangsstück Z1 bei Benutzung zugewandten Oberfläche vorgesehen ist, und zwar um eine Eintiefung, die wenigstens der Höhe des Gewindes Z3a der Schraube Z3 im Auflagermittel entspricht, so dass bei Aufsetzen des Auflagermittels auf das Übergangsstück Z1 die Schraube Z3 weg vom Auflagermittel gezogen werden kann und dadurch nicht kein Eingriff zwischen dem Gewindeloch Z2e und dem Schraubengewinde Z3a besteht, sondern sich vielmehr der Abschnitt der Schraube Z3 mit dem Gewinde Z3a im eingetieften Bereich Z2e1 ein geringes Stück frei hin und her bewegen kann, und wobei auch erst nach Vorschieben der Schraube Z3 in Richtung des Pfeils Z4 ein Eingriff des Gewindes Z3a mit dem Gewinde Z2e möglich wird.

Die Anordnung wird verwendet wie folgt:
Nach korrekter Montage eines Zwischenelementes auf demAuflagermittel, wozu insbesondere die vorstehend beschriebene Lehre verwendet werden kann, insbesondere mit entsprechend angeordnetem Lehren-Gegenstück für das hier beschriebene Auflagermittel, wird das Auflagermittel allgemein so an das Übergangsstück herangeführt, dass zunächst der weiter vorstehende Zapfen Z2b in das Zapfenloch Z1b am Übergangsstück in Formschluss gelangt. Dann wird das Auflagermittel unter vorsichtiger weiterer Annäherung so um den im Zapfenloch Z1b bereits teilweise eingedrungenen Zapfen Z2b gedreht, bis auch das zweite Rundzapfen-Rundloch-Paar Z1a, Z2a in Eingriff kommen. Das Auflagermittel wird dann leicht mit Fingerdruck gegen das Übergangsstück fixiert, wobei der umlaufende Rand Z2c auf dem Übergangsstück Z1 aufsitzt und es wird dann die Schraube Z3 in Richtung des Pfeils Z4 bewegt und deren Gewinde Z3a in das Gewindesackloch Z2e geschraubt und fest angezogen, wobei Anpresskräfte lediglich im Bereich des umlaufenden Rands Z2c, nicht jedoch auf den Formschlusselementen wirken.

Die Anordnung lässt sich ohne weiteres lösen und es ist ein dauerhaft verschleißfreier Wechsel möglich.

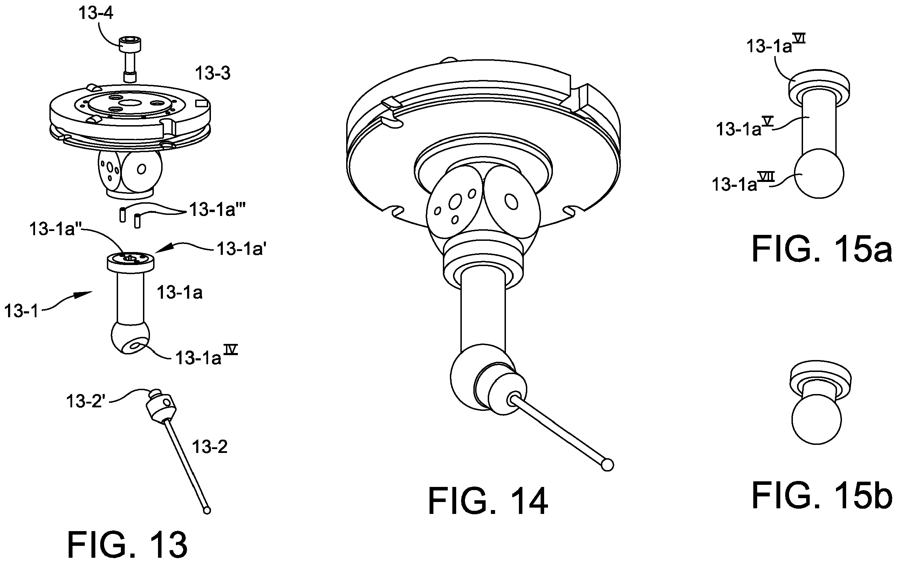

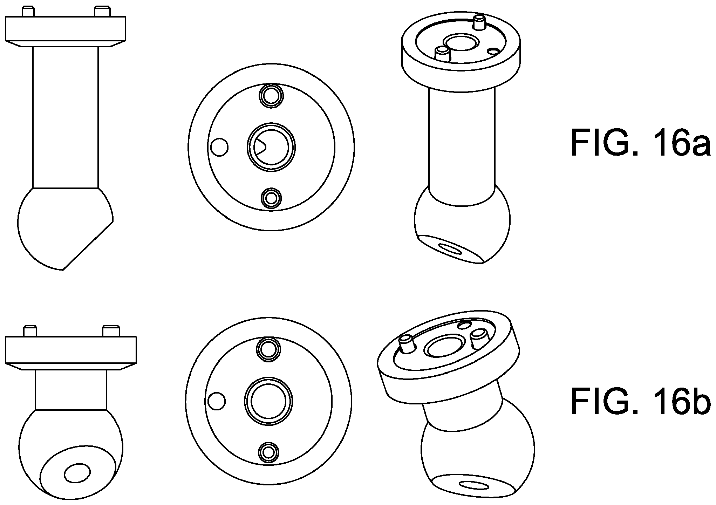

Eine weitere Variante sei nun beschrieben mit Bezug auf die Fig. 13 bis Fig. 16.

Nach Fig. 13 umfasst ein allgemein mit 13-1 bezeichnetes Zwischenelement 13-1 für die Anordnung eines Taststiftes 13-2 gegen den Taststiftträger 13-3 einer Koordinatenmessmaschine einen hier einstückigen Grundkörper 13-1a mit einem Taststiftenende 13-1a', das ein Ankupplungselement 13-1a" und ein Mittel 13-1a‴ aufweist, um eine reproduzierbare Drehausrichtung gegen den Taststiftträger 13-3 der Koordinatenmessmaschine zu gewährleisten, und das am Taststiftende 13-1a eine gegen die Achse des Ankupplungselementes feststehend geneigte, in einer allgemeinen, durch die Anlagefläche abgeflachten Kugelsegmentform vorgesehene Anlagefläche aufweist, die mit einem Form- und/oder Reibschlussmittel für den form- und/oder reibschlüssigen Eingriff mit einem Befestigungsende 13-2' des Taststiftes in Anlage an der Anlagefläche ausgebildet ist.

Wie aus den Fig. 15a und 15b ohne weiteres ersichtlich ist, kann das Zwischenelement 13-1 unterschiedlich lange Schäfte 13-1a^{V} aufweisen. Der Rohling weist zum Maschinenende hin einen verbreiterten Fuß 13-1a^{VI} auf, der einstückig mit dem Schaft gebildet ist, bevorzugt mit diesem durch Abfräsen aus einem Vollstück. Gleiches gilt für das Kugelende 13-1a^{VII}, das ebenfalls bevorzugt einstückig mit dem Schaft und dem Fuß gebildet ist. Dass eine feste Verbindung bei mehrteiligem Aufbau beziehungsweise durch Schweißen, Löten, Kleben usw. vor Bearbeitung der Anlagefläche geschaffen werden könnte, sei aber als Möglichkeit ebenfalls erwähnt.

Das Ankupplungselement 13-1a^{III} ist nun abweichend von den vorerwähnten Varianten nicht als Drehkupplungselement realisiert, sondern durch ein einfaches Schraubgewinde für eine Befestigungsschraube 13-4, durch welche das Zwischenelement am Maschinenende festgeschraubt werden kann. Die reproduzierbare Drehausrichtung wird durch zwei, bevorzugt unterschiedlich dimensionierte Zapfen gewährleistet, die in Ausnehmungen im Zwischenelement 13-1 beziehungsweise dessen Anlagefläche eindringen können und in ihren Aufnahmelöchern spielfrei sitzen.

Hinsichtlich der Herstellung wird aus dem Vorherstehenden einsichtig sein, dass auch für die Zwischenelemente der vorstehend beschriebenen Variante die Anlagefläche durch Abfräsen des Kugelelementes unter geeigneter Fixierung, beispielsweise in einer Lehre, der zu bearbeitenden Zwischenelementrohlinge hergestellt werden kann.

Der Vorteil der vorliegenden Variante ist in der weiter vereinfachten Fertigung zu sehen. In vielen Fällen können dadurch für die Bereitstellung eines immer noch wie gewünscht ausrichtbaren Zwischenstücks die Kosten gesenkt werden.

## Patentansprüche

1. Zwischenelement (1), das dazu ausgebildet ist zwischen einem Taststiftträger (3) am Arm einer Koordinatenmessmaschine und einem gegen den Taststiftträger (3) geneigt ausgerichteten Taststift (2) angeordnet zu werden,
wobei das Zwischenelement (1) mit einem einstückigen Grundkörper mit einem Taststiftende (1a) und einem Maschinenende (1b) gebildet ist, wobei das Maschinenende (1b) ein Ankupplungselement aufweist, das dazu ausgebildet ist, das Zwischenelement (1) an ein koordinatenmessmaschinenarmseitiges Gegenstück anzukoppeln,
wobei das Ankupplungselement ein Drehkupplungselement ist, und wobei das Drehkupplungselement als Zapfen ausgestaltet ist und eine Drehkupplungsachse (1b2) aufweist,
und wobei das Taststiftende (1a) eine Anlagefläche (1a1) aufweist, welche feststehend gegen die Drehkupplungsachse (1b2) des Ankupplungselementes geneigt ist, und welche Anlagefläche (1a1) mit einem Form- und/oder Reibschlussmittel versehen ist, das dazu ausgebildet ist, in einen form- und/oder reibschlüssigen Eingriff in Anlage mit einem an der Anlagefläche (1a1) anzuordnenden Befestigungsende des Taststiftes (2) zu treten,
und wobei das Zwischenelement (1) eine auf der gegenüberliegenden Seite der Anlagefläche (1a1) vorgesehene Planfläche (1d) aufweist, die parallel zur Drehkupplungsachse (1b2) liegt.

2. Zwischenelement (1) nach Anspruch 1, wobei die Neigung der Anlagefläche (1a1) eine Abweichung von einer Senkrechten auf eine Taststiftachse mehr als wenigstens 4° beträgt, bevorzugt zwischen 10° und 85° oder über 95 bis 120° liegt, um einer erforderlichen Sollneigung zu entsprechen.

3. Zwischenelement (1) nach Anspruch 1 oder 2, wobei die geneigte Anlagefläche vom Grundkörper abgefräst ist.

4. Zwischenelement (1) nach einem der Ansprüche 1-3, wobei die Anlagefläche (1a1) an einer allgemeinen Kugelsegmentform angeordnet ist, welche aber durch die plane Anlagefläche abgeflacht ist.

5. Zwischenelement (1) nach einem der Ansprüche 1-4, wobei das Form- oder Reibschlussmittel als Gewindeloch (1a2) gebildet ist, in welches der Taststift (2) einschraubbar ist, wobei bevorzugt das Gewindeloch (1a2) senkrecht in die Anlagefläche (1a1) gebohrt ist.

6. Zwischenelement (1) nach einem der Ansprüche 1-5, wobei das Drehkupplungselement, um eine reproduzierbare Drehausrichtung zu gewährleisten, ein Paarteil eines nichtrotationssymmetrischen Formschlussmittelpaares aufweist, das dazu ausgelegt ist mit einem komplementären maschinenseitigen Paarteil zusammenzuwirken.

7. Zwischenelement (1) nach einem der Ansprüche 1-6, wobei der Zapfen zur Aufnahme in ein Zapfenlager ausgebildet ist, bevorzugt als ein in eine Zapfenlochaufnahme einklebbarer Zapfen.

8. Zwischenelement (1) nach einem der Ansprüche 1-7, wobei der Zapfen eine Eintiefung, bevorzugt eine Rille, aufweist, mit welcher das Zwischenelement (1) durch ein Fixiermittel gegen eine Fläche drängbar ist, über welche ein den Zapfen radial umgebender und/oder kegelartig geneigter Bereich des Zwischenelements (1) sich bei Drehausrichtung hinweg bewegt.

9. Zwischenelement (1) nach einem der Ansprüche 7-8, wobei der Zapfen so ausgestaltet ist, dass eine einmalige Drehausrichtung ermöglicht wird und eine drehrichtungsreproduzierende Maschinenanbringung gewährleistet ist.

10. Zwischenelement (1) nach einem der Ansprüche 1-9, wobei das Drehkupplungselement mit Markierungen versehen ist, die eine Drehausrichtung relativ zur maschinenendseitigen Aufnahme erleichtert, falls dort ebenfalls eine Gegenmarkierung vorhanden ist.

11. Verfahren zur Herstellung eines Zwischenelements (1) nach einem der Ansprüche 1-10, wobei ein Rohling mit einem Ankupplungselement und wenigstens einer zur Drehkupplungsachse (1b2) allgemein parallelen Fläche (1d) hergestellt wird, wobei der Rohling zur Erzeugung der geneigten Anlagefläche (1a1) abgefräst wird, wobei ein Gewindeloch (1a2) senkrecht zu der Anlagefläche (1a1) eingebracht wird.

12. Verfahren nach Anspruch 11, wobei der Rohling in einem Winkelhalter durch zumindest eines von Einspannen oder Auflegen für das Planfräsen angeordnet wird.

13. Verfahren nach Anspruch 11 oder 12, wobei der bereitgestellte Rohling vor Abfräsen im Bereich der auszubildenden Anlagefläche (1a1) allgemein kugelförmig oder kugelsegmentförmig ist.

## Claims

1. Intermediate element (1) which is designed to be arranged between a probe-pin carrier (3) on the arm of a coordinate measuring machine and a probe pin (2), which is oriented in an inclined state in relation to the probe-pin carrier (3),
wherein the intermediate element (1) is formed with a single-piece main body with a probe-pin end (1a) and a machine end (1b),
wherein the machine end (1b) has a coupling element, which is designed to couple the intermediate element (1) to a counterpart on the coordinate-measuring-machine arm, wherein the coupling element is a rotational coupling element,
and wherein the rotational coupling element is configured in the form of a journal and has a rotational-coupling axis (1b2),
and wherein the probe-pin end (1a) has an abutment surface (1a1), which is inclined in a fixed manner in relation to the rotational-coupling axis (1b2) of the coupling element and is provided with a positively locking and/or frictionally locking means which is designed to enter into positively locking and/or frictionally locking engagement in abutment with a fastening end of the probe pin (2), the intention being for the fastening end to be arranged on the abutment surface (1a1),
and wherein the intermediate element (1) has a planar surface (1d), which is provided on the opposite side of the abutment surface (1a1) and is located parallel to the rotational-coupling axis (1b2).

2. Intermediate element (1) according to Claim 1, wherein the inclination of the abutment surface (1a1) is a deviation of a perpendicular in relation to a probe-pin axis of more than at least 4°, preferably between 10° and 85° or above 95° to 120°, in order to correspond to a necessary setpoint inclination.

3. Intermediate element (1) according to Claim 1 or 2, wherein the inclined abutment surface is milled off from the main body.

4. Intermediate element (1) according to one of Claims 1-3, wherein the abutment surface (1a1) is arranged on a general spherical-segment shape, although the latter is flattened by the planar abutment surface.

5. Intermediate element (1) according to one of Claims 1-4, wherein the positively locking or frictionally locking means is in the form of a threaded hole (1a2), into which the probe pin (2) can be screwed, wherein the threaded hole (1a2) is preferably drilled perpendicularly into the abutment surface (1a1).

6. Intermediate element (1) according to one of Claims 1-5, wherein, in order to ensure a reproducible rotational orientation, the rotational-coupling element has one pair part of a non-rotationally symmetrical pair of positively locking means, and this pair part is configured to interact with a complementary machine-mounted pair part.

7. Intermediate element (1) according to one of Claims 1-6, wherein the journal is designed to be received in a journal bearing, preferably in the form of a journal which can be adhesively bonded into a journal-hole-containing mount.

8. Intermediate element (1) according to one of Claims 1-7, wherein the journal has a depression, preferably a groove, by way of which the intermediate element (1) can be forced, by a fixing means, against a surface beyond which a region of the intermediate element (1) that radially surrounds the journal and/or is conically inclined moves during rotational orientation.

9. Intermediate element (1) according to one of Claims 7-8, wherein the journal is configured such that a single rotational orientation is made possible and machine attachment which reproduces the direction of rotation is ensured.

10. Intermediate element (1) according to one of Claims 1-9, wherein the rotary-coupling element is provided with markings which facilitate a rotational orientation relative to the machine-end mount, if a counter-marking is likewise present there.

11. Method for producing an intermediate element (1) according to one of Claims 1-10, wherein a blank with a coupling element and at least one surface (1d) generally parallel to the rotational-coupling axis (1b2) is produced, wherein the blank is milled in order for the inclined abutment surface (1a1) to be created, wherein a threaded hole (1a2) is introduced perpendicularly to the abutment surface (1a1).

12. Method according to Claim 11, wherein, for face-milling purposes, the blank is arranged in an angle holder by at least being either clamped therein or placed thereon.

13. Method according to Claim 11 or 12, wherein, prior to the milling operation, the blank supplied is generally in the form of a sphere or spherical segment in the region of the abutment surface (1a1) which is to be formed.

## Revendications

1. Élément intermédiaire (1), qui est réalisé pour être disposé entre un porte-palpeur (3) sur le bras d'une machine de mesure de coordonnées et un palpeur (2) orienté de manière inclinée par rapport au porte-palpeur (3), l'élément intermédiaire (1) étant formé avec un corps de base d'une seule pièce doté d'une extrémité côté palpeur (1a) et d'une extrémité côté machine (1b), l'extrémité côté machine (1b) présentant un élément d'accouplement qui est réalisé pour accoupler l'élément intermédiaire (1) à une pièce conjuguée côté bras de machine de mesure de coordonnées, l'élément d'accouplement étant un élément d'accouplement en rotation, et l'élément d'accouplement en rotation étant configuré comme un tourillon et présentant un axe d'accouplement en rotation (1b2), et l'extrémité côté palpeur (1a) présentant une face d'appui (1a1), laquelle est inclinée de manière fixe par rapport à l'axe d'accouplement en rotation (1b2) de l'élément d'accouplement, et laquelle face d'appui (1a1) est dotée d'un moyen d'entrée en prise par complémentarité de forme et/ou par friction, qui est réalisé pour venir en appui contre une extrémité de fixation du palpeur (2) devant être disposée contre la face d'appui (1a) dans une entrée en prise par complémentarité de forme et/ou par friction, et l'élément intermédiaire (1) présentant une face plane (1d) prévue sur le côté opposé de la face d'appui (1a1), laquelle face plane est parallèle à l'axe d'accouplement en rotation (1b2).

2. Élément intermédiaire (1) selon la revendication 1, l'inclinaison de la face d'appui (1a1) étant un écart par rapport à une perpendiculaire à un axe de palpeur qui vaut plus qu'au moins 4°, de préférence se situant entre 10° et 85° ou au-delà de 95° à 120°, afin de correspondre à une inclinaison de consigne requise.

3. Élément intermédiaire (1) selon la revendication 1 ou 2, la face d'appui inclinée étant fraisée à partir du corps de base.

4. Élément intermédiaire (1) selon l'une des revendications 1 à 3, la face d'appui (1a1) étant disposée sur une forme de segment sphérique générale, laquelle est cependant aplatie par la face d'appui plane.

5. Élément intermédiaire (1) selon l'une des revendications 1 à 4, le moyen d'entrée en prise par complémentarité de forme ou par friction étant formé comme trou fileté (1a2) dans lequel le palpeur (2) peut être vissé, le trou fileté (1a2) étant percé de préférence perpendiculairement dans la face d'appui (1a1) .

6. Élément intermédiaire (1) selon l'une des revendications 1 à 5, l'élément d'accouplement en rotation présentant, pour garantir une orientation en rotation reproductible, une partie d'une paire de moyens d'entrée en prise par complémentarité de forme ne présentant pas de symétrie de révolution, laquelle partie de paire est conçue pour coopérer avec une partie de paire complémentaire côté machine.

7. Élément intermédiaire (1) selon l'une des revendications 1 à 6, le tourillon étant réalisé pour être reçu dans un palier de tourillon, de préférence comme un tourillon pouvant être collé dans un logement de trou de tourillon.

8. Élément intermédiaire (1) selon l'une des revendications 1 à 7, le tourillon comprenant un évidement, de préférence une rainure, avec laquelle l'élément intermédiaire (1) peut être poussé contre une face par le biais d'un moyen de fixation, face sur laquelle une région de l'élément intermédiaire (1), laquelle région entoure le tourillon radialement et/ou est inclinée de manière conique, se déplace lors de l'orientation en rotation.

9. Élément intermédiaire (1) selon l'une des revendications 7 et 8, le tourillon étant configuré de telle sorte qu'une orientation en rotation unique soit rendue possible et qu'une fixation sur la machine reproduisant le sens de rotation soit garantie.

10. Élément intermédiaire (1) selon l'une des revendications 1 à 9, l'élément d'accouplement en rotation étant doté de marquages, qui facilitent une orientation en rotation par rapport au logement côté extrémité de machine, dans le cas où un marquage complémentaire y est également présent.

11. Procédé de fabrication d'un élément intermédiaire (1) selon l'une des revendications 1 à 10, une ébauche étant fabriquée avec un élément d'accouplement et au moins une face (1d) généralement parallèle à l'axe d'accouplement en rotation (1b2), l'ébauche étant fraisée pour produire la face d'appui inclinée (1a1), un trou fileté (1a2) étant ménagé perpendiculairement à la face d'appui (1a1).

12. Procédé selon larevendication 11, l'ébauche étant disposée dans un support angulaire par serrage et/ou placement pour le fraisage plan.

13. Procédé selon la revendication 11 ou 12, l'ébauche fournie étant généralement sphérique ou en en forme de segment sphérique avant le fraisage dans la région de la face d'appui (1a1) devant être formée.
